# EUROPEAN PATENT APPLICATION

(11) **EP 2 854 327 A1**
(43) Date of publication of application: **01.04.2015**
(21) Application number: 13306311.5
(22) Date of filing: 25.09.2013
(51) Int. Cl.: H04L 9/00, H04L 9/08

(54) **Authentication for optical networks**

(71) Applicant: ALCATEL LUCENT, 92100 Boulogne-Billancourt (FR)
(72) Inventor: Loehr, Jürgen, 70435 Stuttgart (DE)
(74) Representative: MERH-IP Matias Erny Reichl Hoffmann

(57) **Abstract**

A data communication method at a first network element of a transport network comprises:
determining a hash value of a transport container,
encrypting the hash value with a private key of the first network element,
inserting the encrypted hash value into the transport container, and
transmitting the transport container via the transport network.

## Description

### Background

The invention relates to a data communication method within a transport network. Transport networks (e.g. SDH/Sonet, OTN) are used to transport data containers (e.g.VC-4, ODUk) between termination points. These networks provide means to identify a data container, e.g. via path trace located in the overhead associated with the data container.

This allows to identify misconnections and other interruptions of the data container. However, the path tracing mechanism does not provide safe authentication of the two termination points of the transmission path of the container within the transport network. There is thus a need to provide a method and a network element that ensures safe authentication of data transferred in a transport network.

### Summary

Embodiments provide a data communication method, wherein, at a first network element of a transport network, a hash value of a transport container is determined. The transport container may be generated using client signal data which has previously been received at the first network element, e.g. via a suitable client interface, wherein the client signal data are to be sent to a destination using the transport network. The hash value may be determined by applying a hash function to at least a part of the payload of the transport container and optionally to parts or all of the overhead information associated with the transport container, wherein optionally other data may also be included in the hash function. The hash value provides a unique identification of the transport container, such as e.g. a unique identification of payload data and optionally the overhead information being transmitted within the transport container. The hash value is encrypted with a private key of the first network element. Thus, an authentication can be provided that securely links the hash value to the first network element and that authenticates the source of the transport container. Further, the method comprises inserting the encrypted hash value into the transport container and transmitting the transport container via the transport network. Thus, a further network element receives the transport container together with its associated encrypted hash value. The further network element may be an intermediate network element located on the transmission path of the transport container in the transport network from its source to its destination, wherein the intermediate network element forwards the transport container to the destination network element. Alternatively, the further network element may be the destination network element in the transport network.

According to embodiments, the method may further comprise receiving the transport container from a network link of the transport network at a second network element. The encrypted hash value may then be retrieved from the received transport container and may be decrypted using a public key of the first network element. A second hash value may be determined from the transport container by applying the same hash function that was used at the first network element over the same part of the payload of the transport container. Then, the decrypted hash value may be compared with the second hash value. The transport container may be authenticated based on the result of the comparison. Such an authentication allows the second network element to verify whether the received transport container really originated at the first network element (as only the first network element has the private key for encrypting a hash value than can be decrypted using the corresponding public key) and whether the payload data received with the transport container is identical to the data transmitted from the first network element (as any modification of the payload data will lead to a difference between the decrypted hash value and the second hash value).

Thus, using the public key of the first network element, the second network element can authenticate the origin and content of the received transport container without the need to trace and monitor the complete transmission path of the transport container. The asymmetric encryption scheme allows for this authentication to be performed without the need to securely exchange keys amongst network elements. Within the asymmetric encryption scheme, only the public key of the private/public key pair needs to be distributed while the private key remains at the first network element and does not need to be shared with other devices. Distribution of the public key can be performed using potentially unsafe channels, such as e.g. a central key server which communicates via unencrypted data connections with the network elements. Without knowledge of the corresponding private key, a third party cannot make sensible use of the public key for encrypting or decrypting hash values.

According to embodiments, the method may further comprise authenticating the first network element as valid source of the transport container and signaling the authentication result to higher layer network functions of the second network element. Hence, higher layer network functions can be informed on the integrity and authenticity of a received client data signal and can issue warnings or alarms if the authentication indicates that either the source of the transport container, the source of the encrypted hash key, or the content of received data may have been tampered with.

According to embodiments, the method may further comprise replacing, e.g. in a second network element, at least part of the received transport container with a predefined transport container signal if the authentication of the transport container has failed, this predefined transport container signal indicating that the transport container does not include valid data or indicating that the transport container does not contain successfully authenticated data. Thus, any authentication and/or transmission path problems can be communicated together with the transport container so that a further, i.e. intermediate or destination, network element can determine where in the transmission path any misconnection or other modification, e.g. due to a man-in-the-middle attack, may have occurred.

According to embodiments, the signaling and/or replacing steps derived from a failed transport container authentication may be executed only after a certain number of subsequent transport containers could not successfully be authenticated. Bit errors may occur during transmission of a transport container via a transport network. These bit errors would cause the authentication of the transport container and its source to fail, as the hash values determined in the first and in the second network elements would differ. To support resilience of the authentication against such bit errors, the second network element may consider the authentication as failed only after a certain, preferably small, number (e.g.2) of subsequent transport containers fail authentication.

According to embodiments, the second network element may be the destination network element of the transport container in the transport network. Then, the second network element may recreate the mapped client signal from the transport container in order to pass the client signal on for further processing after it has been transmitted by the transport network.

According to embodiments, the inserting step may comprise inserting the encrypted hash value into an overhead field or a set of overhead fields of the transport container. Thus, overhead fields such as reserved field that is not used within the current version of the communication standard governing the transport network, may be used for accommodating the encrypted hash value. The retrieving step may comprise retrieving the encrypted hash value from said overhead field or set of overhead fields.

According to embodiments, the inserting step may comprise inserting the encrypted hash value into a path trace field of the transport container. Thus, the transport container of the present method may share a common structure element with a transport container that is used within a path trace method. The retrieving step may comprise retrieving the encrypted hash value from the path trace field.

According to embodiments, the step of determining the hash value may include applying a hash function on the transport container and on an additional input value that varies over time. The input value that changes over time may comprise e.g. a time stamp or a sequence number. This creates sufficient entropy and change of the hash function result even for static input so that a possible replay attack directed at using an intercepted sequence of transport containers and their encrypted hash values can be averted. According to embodiments, several different input values, such as e.g. a time stamp and a sequence number or different sets of sequence numbers may be combined and the hash function may be applied on the transport container and the plurality of input values. The second network element, which may include intermediate network elements or a destination network element, may perform a consistency check of the received input value, such as time stamp correctness (with some tolerance for not fully synchronized network element clocks) or sequence number correctness relative to previously received sequence numbers. Thus, a replay attack scenario in which intercepted transport containers may be used later for transmission to a second network element can safely be detected at the second network element.

According to embodiments, the step of determining the hash value may include determining the hash value on a sequence of transport containers. The sequence of transport containers (or a sequence of parts of the transport containers, such as e.g. the respective payload sections) may be combined and the hash value may be computed using a hash function over the combined sequence. The step of inserting the encrypted hash value may include inserting a portion of the encrypted hash value into each transport container of the sequence of transport containers. Thus, a large hash value can be distributed over the sequence of transport containers and can thus be accommodated even if the available space within each individual transport container is limited. According to embodiments, the encrypted hash value may be transmitted to the second network element via a multi-frame transmission involving a plurality of transport containers. Thus, full authentication of the plurality of transport containers can be ensured, while the bandwidth for transmission of the encrypted hash value can be minimized.

According to embodiments, the transport container may be a data container of an optical transport network, e.g. according to one of SDH/VC-n, SDH/VC-4-4c, Sonet/STS-n, OTN/ODUk standards. Since the proposed data communication method is independent of any structure details of the communication standard used within the transport network, it can be implemented with any network standard.

According to embodiments, a network element of a transport network is provided, comprising at least one client interface to receive client data and a mapping unit to map client data into at least one transport container. In case the type of the client signal and the type of the transport container used in the transport network are equal, the mapping may be directly one-to-one from the client signal to the transport container. Further, an encryption unit is provided to determine a hash value of the at least one transport container and to encrypt the hash value with a private key of the network element. The hash value may be determined by applying a hash function to at least a part of the payload and optionally also at least a part of the overhead information of the transport container, wherein optionally other data may also be included in the hash function. A transmission unit is adapted to transmit the at least one transport container via a network link of the transport network. The transport container may include at least a portion of the encrypted hash value.

According to embodiments, the encryption unit may apply a hash function to a sequence of transport containers and may determine a hash value for the entire sequence and encrypt the hash value using an asymmetric encryption method. The transmission unit may include a portion of the encrypted hash value into a fixed position in each transport container of the sequence of transport containers. The transmission unit may transmit the encrypted hash value via a multi-frame sequence. Thus, each individual frame within the multi-frame sequence only needs to accommodate a part of the encrypted hash value, so that the overall bandwidth can be kept low even if large encrypted hash values are to be transmitted.

According to embodiments, another network element of a transport network is provided, comprising a receiving unit to receive at least one transport container from the transport network and a decryption unit to retrieve an encrypted hash value from the received at least one transport container. The decryption unit is adapted to decrypt the encrypted hash value with a public key of the origin network element, and to determine a second hash value from the at least one transport container by applying a hash function on the at least one transport container. The hash function applied at the other network element may be identical to the hash function applied at the first network element described above. The hash function at the other network element may be applied over the same part of the transport container or the same part of the payload data of the transport container as the hash function applied at the first network element described above. Further, an authentication unit is provided to compare the decrypted hash value with the second hash value, and to authenticate the at least one transport container based on the result of the comparison.

According to embodiments, the other network element may further comprise at least one client interface to forward client data received via the at least one transport container if the authentication unit authenticates the origin of the at least one transport container. In order to recover the client data, the payload of the transport container may be mapped onto a client signal format. The client interface may further be used for communicating authentication information regarding the transmission and content of the client data to another device. The client interface may be in particular configured according to the Ethernet, OTUk, STM-n and/or Fiberchannel standard.

Even though two separate network elements have been described above, wherein one performs the processing related to creation and transmission of the transport container comprising the encrypted hash value, and the other one performs the processing related to receiving and authenticating the transport container, it may be understood that both functions can be performed within the same network element. For bidirectional communication in the transport network, a single network element may be adapted to serve both as a source as well as an intermediate network element or a destination for a transport container. Thus, a combination of the network elements described above is within the scope of the disclosure of the present description.

According to embodiments, the transport network may be an optical transport network, in particular employing SDH, Sonet, OTN, and/or DWDM transmission technology.

The present description is directed at embodiments of a method and at embodiments of a network element device. However, it is to be understood, that any features described in terms of method steps may also be implemented as device features and vice versa.

### Detailed description

Various aspects are explained below in an exemplary manner with reference to the accompanying drawings, wherein:
Fig. 1 shows a schematic overview of an example transport network;
Fig. 2 shows an example of a general data container transport method;
Fig. 3 shows an example of a misconnection in the data container transport method of Fig. 2;
Fig. 4 shows a data container transport method according to an embodiment;
Fig. 5 shows a misconnection in the data container transport method of Fig. 4;
Fig. 6a shows a schematic view of a multi-frame data transport container
wherein an encrypted hash value may be embedded;
Fig. 6b shows an example of an encrypted hash value being accommodated in a multi-frame transport container;
Fig. 7 is a flowchart showing a data communication method for transmitting data according to an embodiment; and
Fig. 8 is a flowchart showing a data communication method for receiving and authenticating data according to an embodiment.

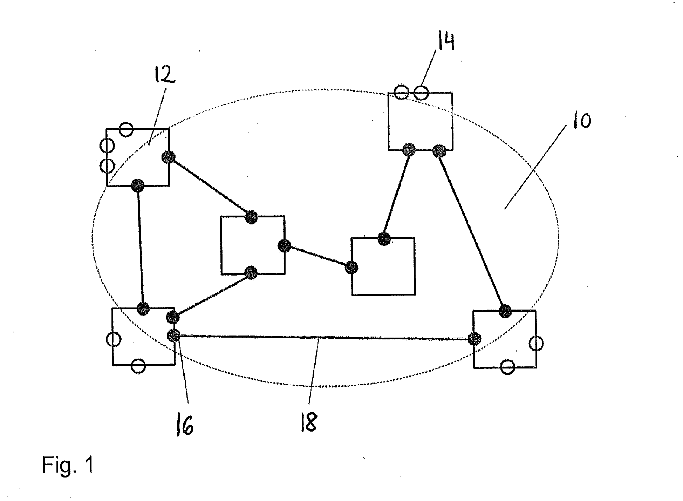

As shown in Fig. 1, a transport network 10, such as e.g. an optical transport network, comprises a plurality of network elements 12, wherein each network element 12 comprises a system having a set of (optionally standardized) client interfaces 14, and/or a set of (optionally standardized for a subset or all parameters/properties) line interfaces 16. For a given network element 12, the set of client interfaces 14 may be empty.

Network elements 12 are connected to each other via transport links 18, which may be optical fiber links or wireless communication links. Communication via the transport links 18 is controlled by the line interfaces 16 of the respective network elements 12.

Within a network element 12, client signals may be received via a client interface 14 and may be mapped into data containers of an appropriate format for transport of the client signal through the transport network 10. In case the type of the client signal and the type of the transport container used between network elements of the transport network are equal, the mapping may be one-to-one from the client interface transport container to the transport network data container.

In order to monitor signal transmission within the transport network 10, client signals and transport containers may be monitored and supervised during their transmission path from a sender network element 12 to a receiver network element 12, so that transport containers may be protected from failures in the network and that a receiver may be informed if any problems occur with the transmission path or with the transport container comprising the client signal as a payload.

In embodiments, the transmission technologies used within the transport network 10 may comprise e.g. SDH/Sonet, OTN or DWDM. The client interfaces 14 may e.g. comprise Ethernet (GE, 10GE, 40GE, 100GE), SDH/Sonet STM-n/OC-n (e.g. STM-1/OC-3, STM-4/OC-12, STM-16/OC48, STM-64/OC-192), OTN (e.g. OTU1, OTU2, OTU3, OTU4) or Fiberchannel interfaces (e.g. 4GFC, 8GFC, 10GFC). The line interfaces 16 may be configured according to e.g. the STM-n or OTN (OTU-2, OTU-3, OTU-4) standards. As transport containers, various known transport data formats, such as e.g. VC-4, VC-4-4c, ODUO, ODU1, ... may be used.

An example transport network 10 may be an optical transport network according to the ITU-T standard G.709 for Optical Transport Networks (OTN). Therein, the network elements 12 may provide the functionalities of transport, multiplexing, switching, management, supervision and survivability of optical channels carrying client signals. An optical network element may be configured to perform the "3R" processing of re-timing, re-amplifying and re-shaping a signal.

The network elements 12 may process a variety of signal types, such as e.g. OTN, SONET/SDH, Ethernet/FibreChannel frames, or packets. A few of the processing functions performed on these signals may comprise protocol processing of signals, such as e.g. forward error correction (FEC) on OTN signals, multiplexing and de-multiplexing of OTN signals, mapping and de-mapping of non-OTN signals into and out of OTN signals, and packet processing in conjunction with mapping/de-mapping of packet into and out of OTN signals. The OTN signals at various data-rates may all have the same frame structure but the frame period may reduce as the data-rate increases.

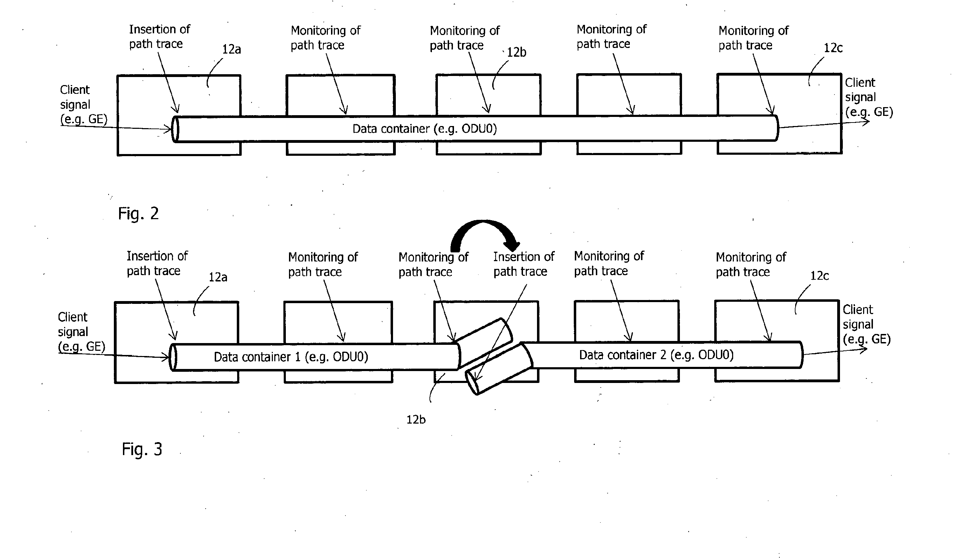

Fig. 2 shows an example of data transmission in a known optical transport network. Therein, a first network element 12a receives a client signal via its client interface 14 (see Fig. 1) and maps it into a transport container. A path trace signal may be inserted into the transport container. During the transmission of the transport container via transport links 18 within the transport network 10, the path trace can be monitored by network elements 12b along the transmission path. The destination network element 12c can finally decode the client signal and determine whether the path trace value is correct.

In the case shown in Fig. 3, a misconnection, which may be intentional/malicious or accidental, occurs in one of the intermediate network elements 12b on the transmission route. As the transmission towards the destination network element 12c is resumed, a new path trace value is inserted into the new transport container which is generated at the intermediate network element 12b. As the intermediate network element 12b at which the misconnection occurs can read the path trace value of the originally sent transport container, it could insert an identical path trace value into the new transport container. In this case, the destination network element 12c cannot detect the misconnection that occurred on the transmission path, as the path trace value of the received second transport container is identical to the path trace value of the transport container that was created at the source network element 12a.

In the case of an intentional/malicious misconnection, the client signal data could thus be tampered with at an intermediate network element 12b without the destination network element 12c knowing about it, as the destination network element 12c may still receive a path trace value that implies a trouble-free transmission as depicted in Fig. 2. Thus, the known method of path tracing does not provide tamper-proof authentication of the transmitted client signal data.

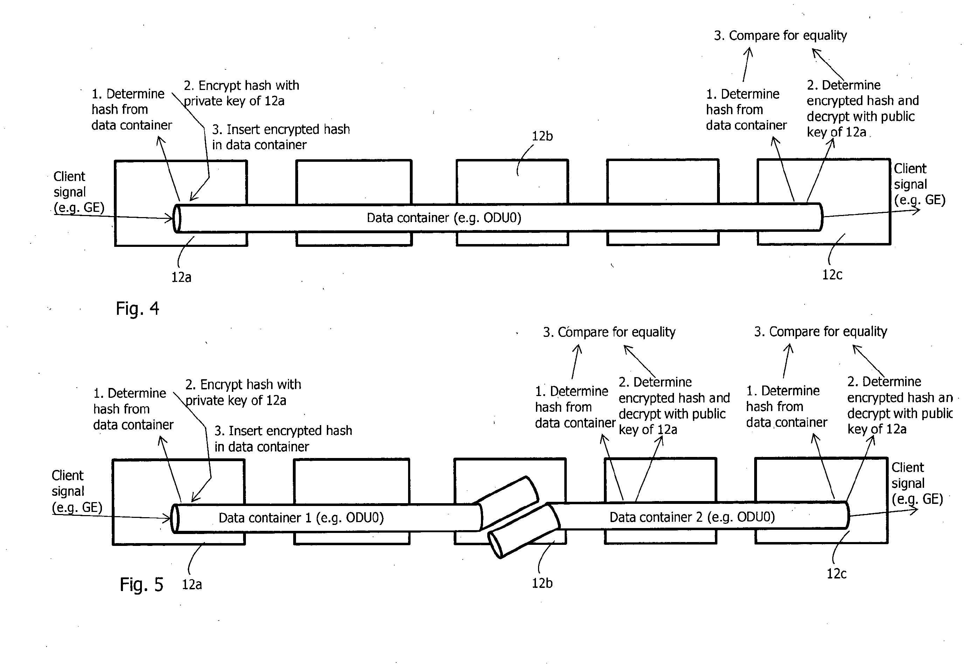

Fig. 4 shows an embodiment of a data communication method. At the first network element 12a, a client signal is received, e.g. via a client interface 14 (see Fig. 1), and a transport data container is generated which comprises the client signal. As a non-limiting example, the transport data container may be an ODU (optical channel data unit) signal, which contains the mapped client signal as a payload.

For each network element 12a that acts as a source, one or several asymmetric key pairs may be generated, each key pair comprising a public key and a correlated private key. The private key is safely transferred only to the source network element 12a. The public key is publicized to all other network elements 12b, 12c that may need to authenticate the transport container source, e.g. the transport container destination 12c and possibly also intermediate network elements 12b on the transmission path. To ensure key consistency and authenticity, additional mechanisms may be used, e.g. key certificates. One option for achieving key certification and distribution is the use of a public key infrastructure (PKI), wherein a central server may store and provide public keys for a large number of network elements 12.

In addition, a key pair may be associated with a specific link 18 in the transport network, and additional authentication can be performed separately for each link 18. This further enhances security by ensuring link source authentication, preferably separately or jointly in both directions of a bidirectional link.

The asymmetric key pair consisting of associated public and private key may be generated in accordance with the used asymmetric encryption scheme used to encrypt the hash value. This scheme may be e.g. RSA. The key pair may e.g. be created once a first network element 12a is added to the network, or once a client interface 14 or a line interface 16 is added to the network. So a private key may be related to either a complete first network element 12a and be used for all transport containers whose authentication check originates at network element 12a, or the private key may be related to a client interface 14 and be used for authenticating the particular transport container that gets the client signal from the client interface mapped into, or to a line interface 16 that is the first line interface a particular authenticated transport container is transported on. The destination network element 12c uses the public key that relates to the private key used for authentication of the transport container in the source network element 12a.

The asymmetric key pair may be generated inside the source network element 12a, with the private key remaining in network element 12a and the public key being communicated to preferably all other network elements of the transport network. This approach has the advantage of avoiding the communication of the private key over potentially unsafe communication channels. Alternatively, the asymmetric key pair may be generated by a key generation entity outside the network elements of the transport network, or being part of a network element of the transport network. This approach implies the need for safe communication of private keys from the key generation entity to the related network elements. This safe communication of private keys is done preferably using encryption mechanisms in a way that only the key generation entity and the network element related to the private key can obtain knowledge of the private key.

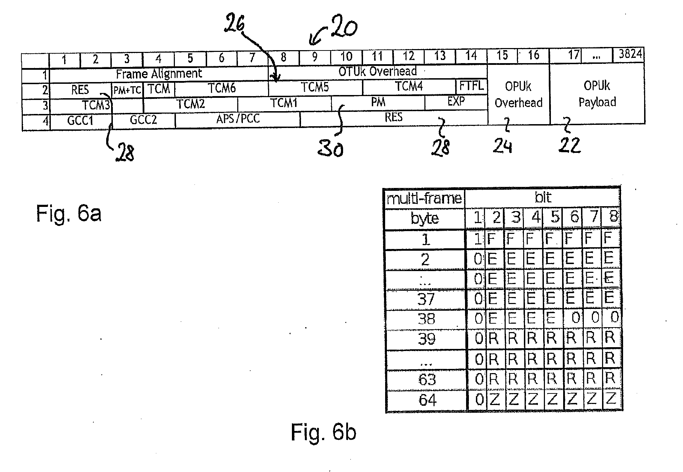

The network element 12a that acts as a source then computes a hash, wherein a cryptographic hash function, e.g. SHA-2 may be used, over the ODU signal or over parts of the ODU signal, such as e.g. the payload data or parts of the payload data, and optionally additional data. Then, an encrypted hash value may be generated which has been encrypted using the network element's private key and which can be decrypted using the network element's public key. The encrypted hash may be inserted into an overhead portion of the ODU signal, as will be explained in greater detail below with reference to Fig. 6.

The destination network element 12c, and optionally any network element 12b on the transmission path, may compute the hash of the ODU signal in the same way as the source. It may also read the encrypted hash value from the ODU overhead and decrypt it using the public key of the network element 12a that acts as a transport container source. Then, the locally computed hash is compared to the decrypted hash value received with the ODU signal.

If both hash values match, the source and the content of the transport data container that was used for computing the hash is authenticated. As the encrypted hash value could be decrypted using the source's public key, the origin of the transport data is verified to the source element 12a. As the hash function computed over the payload content of the transport container and optionally additional data at the destination returns the same value as the hash function computed (and subsequently encrypted) at the source, the content of the transport data container received at the destination is verified as being equal to the content transmitted by the source.

If they do not match, the transport data container and/or the source is/are not safely authenticated, indicating a potential misconnection or intentional change of the transmitted data e.g. as a result of a man-in-the-middle attack. Optionally, the destination network element may consider the authentication to have failed after a certain, preferably small, number of subsequent not matching hash values, to avoid that bit errors during transmission cause failure of authentication.

Fig. 5 shows the above-described method in the case that a misconnection occurs at an intermediate network element 12b during the transmission of the transport container. Similar to the case shown in Fig. 3, an intentional or accidental misconnection occurs in an intermediate network element 12b in the transmission path of the transport data container. If, during the creation of a new transport data container at the intermediate network element 12b, any data that was used for computing the hash value is altered, the hash value of the ODU signal will no longer match the encrypted hash value included with the ODU overhead. Since the intermediate network element 12b does not possess the private key of the source network element 12a, it cannot recreate a "forged" encrypted hash value which would reflect the altered ODU signal. Thus, the comparison of the decrypted and the computed hash value at the destination network element 12c will fail.

Hence, a man-in-the-middle attack or an accidental misconnection can be detected using the method according to the above-described embodiment, as the computed and the received and decrypted hash values will no longer match if the ODU signal has been altered along the transmission path. As shown in Fig. 5, not only the destination network element 12c, but also any intermediate network element 12b that is located on the transmission path between a misconnection event and the destination network element 12c can use the public key of the source network element 12a for authentication of the source network element 12a and of the ODU signal. Thus, the method according to the above-described embodiment allows for secure authentication of the source and content of a transport container comprising a client signal that is received via a transport network 10.

In order to avoid replay attacks which may occur with static ODU content, the hash function may involve other input values that change over time, e.g. a time stamp or a sequence number. This creates entropy and changes the hash function result even for static input. The destination network element 12c and potentially intermediate network elements 12b may perform a consistency check of the received other value, e.g. a check for time stamp correctness (with some tolerance for not fully synchronized network element clocks) or sequence number correctness relative to previously received sequence numbers.

The result of the authentication may be communicated to external entities (e.g. to network management systems) to indicate the authentication status. Consequent actions may be derived from the authentication result. According to embodiments, the transport container may be squelched (e.g. a replacement signal may be inserted instead of the received transport data container contents), or authentication result indications may be inserted into the transport data container or its associated overhead.

Fig. 6a shows an example of a multi-frame OTUk transport container 20 according to the ITU-T G.709 standard. Therein, the client signal, which may have been received at a network element 12 via its client interface 14, is converted to an optical channel payload unit (OPUk) 22, to which an OPUk overhead 24 is added. From the OPUk the ODUk transport container is composed by adding the ODUk overhead. The ODUk overhead 26 consists of bytes 1 to 14 in rows 2 to 4, containing e.g. regions for tandem connection monitoring (TCM) and path monitoring (PM). From the ODUk the OTUk transport unit 20 is created by adding the OTUk overhead. The OTUk overhead consists of bytes 8 to 14 in row 1.

In case the client signal is an ODUk, e.g. arriving via a client interface of type OTUk, the ODUk transport container is created directly from the ODUk arriving from the client interface, keeping OPUk payload, OPUk overhead and ODUk overhead unchanged, except modifying the ODUk overhead by the insertion of the encrypted hash value.

Within the overhead 26 of the standard OTU configuration 20 depicted in Fig. 6, there are reserved byte sections (RES) 28 which are currently reserved for future international standardization. The encrypted hash value according to an embodiment may be inserted into such a RES section 28 or into a part thereof, e.g. at byte 1 in row 2 as shown in Fig. 6a. Alternatively, the path tracing field 30 of the transport container 20 may be used for inserting the encrypted hash value. According to further embodiments, the encrypted hash value may be inserted at various locations within the RES section 28 or anywhere within the ODUk overhead 26 or within the OPUk overhead 24 of the optical transport unit container 20.

For some embodiments, if the encrypted hash value is larger than the available space within a single frame, e.g. larger than the allocated space within the RES section 28 or the path trace field 30 of a single frame, a multi-frame hash value may be computed, e.g. over a sequence of the OPUk payload signal (or parts thereof) of multiple frames. The hash value may then be encrypted using the source network element's private key as described above.

The encrypted hash value may then be divided into portions which are small enough to each fit into the allocated space within a single frame of the OTU 20. In this way, full authentication is provided requiring lower bandwidth for encrypted hash value transmission. Instead of providing a separate hash value for each single frame, according to the above-described embodiment the resulting hash value authenticates the complete OTUk multi-frame sequence. The destination network element 12c and intermediate network elements 12b may compute the multi-frame hash value in the same way as the source network element 12a, using multi-frame boundary information, e.g. from the multi-frame signal depicted in Fig. 6b, in order to identify the beginning and end of a multi-frame sequence.

Fig. 6b shows an example of an encrypted hash value that has been inserted into a multi-frame sequence. In the depicted frame of multi-frame sequence, the first bit per byte indicates the multi-frame boundary wherein a value of 1 denotes the start of a multi-frame sequence and a value of 0 denotes the continuation of the current multi-frame sequence.

The bits marked as "F" in the example shown in Fig. 6b, byte 1, bits 2-8, may e.g. be flags used for various purposes, and may not necessarily be related to the encrypted hash value. The encrypted hash value could e.g. be inserted into the bits marked as "E", i.e. byte 2, bit 2 to byte 38, bit 5. If the encrypted hash value has a length of 256 bits, the remaining bits 6-8 in byte 38 may be set to 0.

The bytes 39 to 63, marked as "R" in Fig. 6b, may be reserved for payload data or for other components of the transport container shown in Fig. 6a. The bits marked "Z", i.e. bits 2-8 in byte 64, may be the checksum over bits 2-8 of bytes 1-63, wherein the checksum may e.g. be computed used the CRC7 method.

It should be noted that the number of bits needed to transport the encrypted hash value depends at least on the used encryption mechanism, e.g. RSA, and the chosen key lengths for public and private keys. According to the chosen combination of these parameters, a different number of bits and consequently a different number of frames per multi-frame may be required.

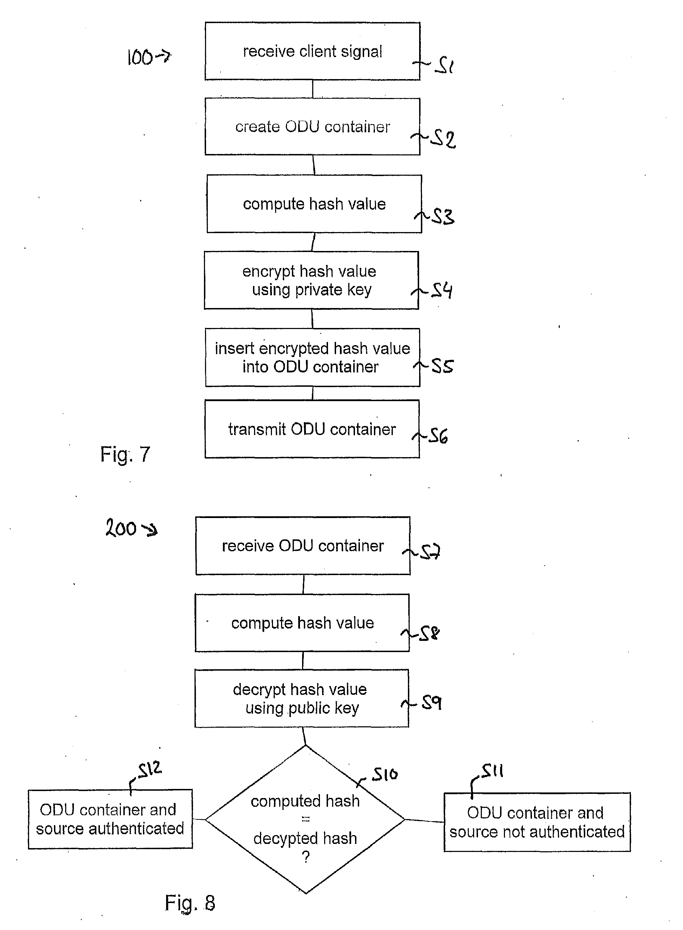

Fig. 7 is a flowchart showing an embodiment of a data communication method 100 performed at a source network element 12a. In step S1, a client signal is received via a client interface 14 of the source network element 12a. The client signal may e.g. comprise an Ethernet signal or any other signal that is to be transmitted via the transport network 10. In step S2, the client signal is processed at the source network element 12a and is mapped into a format compatible with the transport data container standard of the transport network 10. For an optical transport network according to the ITU-T G.709 standard, this may comprise mapping the client signal into a payload of an optical transport unit OTUk container 20 and adding various layers of overhead data.

Once the client signal has been formatted for transmission in the transport network, a hash value is computed in step S3 over a part of the transport container according to a predefined hash algorithm that is common to all network elements 12 within the transport network 10 which participate in the authentication mechanism.

According to embodiments, the hash value may be computed over the payload section of the transport container or over only a part of the payload section of the transport container, and optionally over other data, possibly including at least parts of the overhead information of the transport container. Further, an input value that varies over time, such as a time stamp or a sequence number may be incorporated into the hash value in order to provide an even higher level of security. The hash value may also be computed over a multi-frame sequence of transport container frames, thus providing a single hash value for the multi-frame sequence.

Using the source network element's private key of an asymmetric public/private key pair, the hash value is encrypted in step S4 and is inserted into the transport container in step S5. Therein, the encrypted hash value may be inserted into a path trace field of the transport container, or it may be inserted into a reserved field within the transport container which is reserved for future international standardization and which is not assigned within the current standard, or in other overhead fields of the transport container. Finally, in step S6, the transport container with the encrypted hash value inserted therein is transmitted via a line interface 16 of the network element 12a.

Fig. 8 is a flowchart showing an embodiment of a data communication method 200 performed at a destination network element 12c or at an intermediate network element 12b on the transmission path between the source network element 12a and the destination network element 12c. In step S7, a transport container is received at the intermediate/destination network element 12. In step S8, the network element 12 computes a hash value according to the same predefined hash algorithm that was used for computing the hash value in step S3 above.

Further, the encrypted hash value is read from the path trace field or the reserved field in the transport container, and is decrypted in step S8 using the source network element's public key, which has been distributed by the source network element 12a via the transport network 10 or which has been retrieved from a public key infrastructure, such as a public key repository. In step S10, the decrypted hash value and the computed hash value are compared.

If the hash values are identical ("Yes" in step S10), then the received transport container and its source are authenticated in step S12. This result may be communicated to higher layer network functions of the destination/intermediate network element 12. In the case of an intermediate network element 12 performing the authentication, the authentication result may be propagated to the destination network element 12c in order to provide a transport container authentication tracing functionality.

If the hash values are not identical ("No" in step S10), the intermediate/destination network element 12 determines in step S11 that the source and/or the content of the transport container are not authenticated. In this case, at least part of the received transport container may be replaced with a predefined transport container which indicates that the transport container does not include valid data. Further, in the case of an intermediate network element 12b performing the authentication, the authentication result may be propagated to the destination network element 12c in order to allow to pinpoint where along the transmission path the misconnection or data interception occurred. Further, the negative result of the transport container authentication may be indicated to entities outside the network elements, e.g. network management systems controlling and supervising the transport network 10.

Therein, the predefined transport container portion, which may be inserted whenever the authentication fails at an intermediate or at a destination network element, may comprise a flag setting which indicates a failed authentication and it may further include information on the location of the authentication failure within the transport network. According to some embodiments, the payload of the original transport container may be replaced with a predefined warning message if the authentication fails, in order to prevent that possibly malicious content is passed on to the client at the destination network element without indication to the device connected to the client interface.

The indication of failed authentication may be transported preferably in the overhead of the transport container, e.g. in existing overhead channels such as tandem connection monitoring (TCM) channels or in overhead bytes reserved for future standardization, e.g. RES bytes as indicated in Fig. 6a. Alternatively, the indication may be transported in an appropriate way in the data fields used to transport the encrypted hash key, e.g. as flags in the multi-frame as indicated in Fig. 6b.

It should be noted that in contrast to the encrypted hash, above indication itself is not authenticated, i.e. can be tampered with in intermediate network elements without a safe mechanism for subsequent network elements to safely detect those modifications. Thus, the indication can be used as additional information in intermediate and destination network elements, but does not replace the transport container authentication as described in the invention.

Step S11 in Fig. 8 may contain a hold-off mechanism that triggers the execution of consequent actions, e.g. sending indications to network management systems or replacing the transport container with a predefined replacement signal, only if the authentication fails for a certain, preferably small, number of subsequent transport containers. This provides resilience of the authentication against bit errors occurring to the transport container in the transport network 10.

If the hash algorithm includes an input value that varies over time, such as a time stamp or a sequence number, a failed authentication may also be due to a mismatch in system clocks of the source network element 12 and the intermediate/destination network element 12 or due to transport containers arriving out of sequence order. In this case, the failed authentication may provide valuable information about the transport network, which may be used for monitoring and managing network performance and e.g. adjusting network settings and/or synchronizing network element clocks.

In addition to the features described above in conjunction with specific embodiments, there are various modifications that are within the scope of the claimed subject-matter. The authentication using an encrypted hash value may be used or not used independently for each transport data container, so that there may be a mix of authenticated and non-authenticated transport containers being transmitted between a particular source and a destination network element 12.

Transport container monitoring points at intermediate network elements 12 may authenticate (by evaluating the hash values as described above) or not authenticate (by ignoring the hash value information) a transport container. Some network elements 12 may even not be adapted to support the described processing, so that the claimed data communication method can be integrated with existing network infrastructure. Even the destination network element 12 may decide to ignore the hash information or may not support authentication. This allows data communication between network elements supporting and others not supporting the authentication mechanism to be performed without having to adapt the transport container format.

Further, the proposed data communication method and network element achieve a tamper-proof authentication of a client signal sent within a transport network using a transport data container. The transport data container comprises an encrypted hash value of the transport data container or of a part of the transport data container, such as e.g. the payload data. The encryption is performed at the source network element using the private key of this network element. Thus, the encrypted hash value can be decrypted by any network element which has the public key of the source network element and which receives the transport data container. The decrypted hash value can then be compared to a hash value computed over the received data container, and if the decrypted hash value matches the computed hash value, both the origin of the transport data container at the source network element and the content of the transport data container are authenticated. With a secure asymmetric encryption method, a man-in-the-middle attack will lead to the computed hash value of the (tampered-with) transport data container being different to the received encrypted hash value which has been created at the source network element.

It should be noted that the description and drawings merely illustrate the principles of the proposed methods and devices. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

## Claims

1. Data communication method, comprising at a first network element of a transport network:
determining a hash value of a transport container,
encrypting the hash value with a private key of the first network element,
inserting the encrypted hash value into the transport container, and
transmitting the transport container via the transport network.

2. Method of claim 1, further comprising at a second network element:
receiving the transport container from a network link of the transport network,
retrieving the encrypted hash value from the received transport container,
decrypting the hash value with a public key of the first network element,
determining a second hash value from the transport container,
comparing the decrypted hash value with the second hash value,
authenticating the transport container based on the result of the comparison.

3. Method of claim 2, further comprising authenticating the first network element as valid source of the transport container and signaling the authentication result to higher layer network functions of the second network element.

4. Method of claim 2 or 3, further comprising replacing at least part of the received transport container with a predefined transport container signal if the authentication of the transport container has failed, the predefined transport container signal indicating that the transport container does not include valid data, or indicating that the transport container does not contain successfully authenticated data.

5. Method of claim 3 or 4, wherein the signaling and/or replacing steps derived from a failed transport container authentication are executed only after a certain number of subsequent transport containers could not successfully be authenticated.

6. Method of any one of claims 2 to 5, wherein the second network element is the destination network element of the transport container in the transport network.

7. Method of any previous claim, wherein the inserting step comprises inserting the encrypted hash value into an overhead field or a set of overhead fields of the transport container and the retrieving step comprises retrieving the encrypted hash value from said overhead field or set of overhead fields.

8. Method of any previous claim, wherein the inserting step comprises inserting the encrypted hash value into a path trace field of the transport container and the retrieving step comprises retrieving the encrypted hash value from the path trace field.

9. Method of any previous claim, wherein the step of determining the hash value includes applying a hash function on the transport container and on an additional input value that varies over time.

10. Method of any previous claim, wherein the step of determining the hash value includes determining the hash value on a sequence of transport containers, and the step of inserting the encrypted hash value includes inserting a portion of the encrypted hash value into each transport container of the sequence of transport containers.

11. Method of any previous claim, wherein the encrypted hash value is transmitted to the second network element via a multi-frame transmission involving a plurality of transport containers.

12. Network element of a transport network, comprising
at least one client interface to receive client data,
a mapping unit to map client data into at least one transport container,
an encryption unit to determine a hash value of the at least one transport container and to encrypt the hash value with a private key of the network element, and
a transmission unit to transmit the at least one transport container, the transport container including at least a portion of the encrypted hash value, via a network link of the transport network.

13. Network element of claim 12, wherein the encryption unit applies a hash function to a sequence of transport containers, determines a hash value for the entire sequence and encrypts the hash value using an asymmetric encryption method, and the transmission unit includes a portion of the encrypted hash value into a fixed position in each transport container of the sequence of transport containers and transmits the encrypted hash value via a multi-frame sequence.

14. Network element of a transport network, comprising
a receiving unit to receive at least one transport container from the transport network,
a decryption unit to retrieve an encrypted hash value from the received at least one transport container, to decrypt the encrypted hash value with a public key of the origin network element, and to determine a second hash value from the at least one transport container by applying a hash function on the at least one transport container, and
an authentication unit to compare the decrypted hash value with the second hash value, and to authenticate the at least one transport container based on the result of the comparison.

15. Network element of claim 14, further comprising at least one client interface to forward client data received via the at least one transport container if the authentication unit authenticates the origin of the at least one transport container, the client interface in particular configured according to the Ethernet, STM-n and/or Fiberchannel standard.

## Amended claims

### Amended claims in accordance with Rule 137(2) EPC.

1. Data communication method, comprising at a first network element (12, 12a, 12b, 12c) of a transport network (10):
receiving (S1) client data;
mapping (S2) the received client data into a payload (22) of at least one
transport container (20) and adding overhead data (24, 26) of the transport container (20);
determining (S3) a hash value of at least a part of the payload (22) and at
least a part of the overhead data (24, 26) of the transport container (20),
encrypting (S4) the hash value with a private key of the first network
element (12a),
inserting (S5) the encrypted hash value into the transport container (20),
and
transmitting (S6) the transport container (20) via the transport network (10).

2. Method of claim 1, further comprising at a second network element (12c):
receiving (S7) the transport container (20) from a network link of the
transport network (10),
retrieving the encrypted hash value from the received transport container (20),
decrypting (S9) the hash value with a public key of the first network
element,
determining (S8) a second hash value from the transport container (20),
comparing (S10) the decrypted hash value with the second hash value,
authenticating (S12) the transport container (20) based on the result of
the comparison.

3. Method of claim 2, further comprising authenticating the first network element (12a) as valid source of the transport container (20) and signaling the authentication result to higher layer network functions of the second network element (12c).

4. Method of claim 2 or 3, further comprising replacing at least part of the received transport container (20) with a predefined transport container signal if the authentication of the transport container (20) has failed, the predefined transport container signal indicating that the transport container (20) does not include valid data, or indicating that the transport container (20) does not contain successfully authenticated data.

5. Method of claim 3 or 4, wherein the signaling and/or replacing steps derived from a failed transport container (20) authentication are executed only after a certain number of subsequent transport containers (20) could not successfully be authenticated.

6. Method of any one of claims 2 to 5, wherein the second network element (12c) is the destination network element of the transport container (20) in the transport network (10).

7. Method of any previous claim, wherein the inserting step comprises inserting the encrypted hash value into an overhead field (28) or a set of overhead fields (28) of the overhead data (24, 26) of the transport container (20) and the retrieving step comprises retrieving the encrypted hash value from said overhead field (28) or set of overhead fields (28).

8. Method of any previous claim, wherein the inserting step comprises inserting the encrypted hash value into a path trace field (30) of the transport container (20) and the retrieving step comprises retrieving the encrypted hash value from the path trace field (30).

9. Method of any previous claim, wherein the step of determining the hash value includes applying a hash function on the transport container (20) and on an additional input value that varies over time.

10. Method of any previous claim, wherein the step of determining the hash value includes determining the hash value on a sequence of transport containers (20), and the step of inserting the encrypted hash value includes inserting a portion of the encrypted hash value into each transport container (20) of the sequence of transport containers (20).

11. Method of any previous claim, wherein the encrypted hash value is transmitted to the second network element (12c) via a multi-frame transmission involving a plurality of transport containers (20).

12. Network element (12, 12a) of a transport network (10), comprising at least one client interface (14) to receive client data,
a mapping unit to map client data into a payload (22) of at least one transport container (20) and to add overhead data (24, 26) of the transport container (20),
an encryption unit to determine a hash value of at least a part of the payload (22) and at least a part of the overhead data (24, 26) of the at least one transport container (20) and to encrypt the hash value with a private key of the network element (12, 12a), and
a transmission unit to transmit the at least one transport container (20), the transport container (20) including at least a portion of the encrypted hash value, via a network link (18) of the transport network (10).

13. Network element (12, 12a) of claim 12, wherein the encryption unit applies a hash function to a sequence of transport containers (20), determines a hash value for the entire sequence and encrypts the hash value using an asymmetric encryption method, and the transmission unit includes a portion of the encrypted hash value into the overhead data (24, 26) of a fixed position in each transport container (20) of the sequence of transport containers (20) and transmits the encrypted hash value via a multi-frame sequence.

14. Network element (12, 12b, 12c) of a transport network (10), comprising a receiving unit to receive at least one transport container (20) from the transport network (10),
a decryption unit to retrieve an encrypted hash value from the received at least one transport container (20), to decrypt the encrypted hash value with a public key of the origin network element (12, 12b, 12c), and to determine a second hash value from the at least one transport container (20) by applying a hash function on at least a part of the payload (22) and at least a part of the overhead data (24, 26) of the at least one transport container (20), and
an authentication unit to compare the decrypted hash value with the second hash value, and to authenticate the at least one transport container (20) based on the result of the comparison.

15. Network element (12, 12b, 12c) of claim 14, further comprising at least one client interface (14) to forward client data received via the at least one transport container (20) if the authentication unit authenticates the origin of the at least one transport container (20), the client interface (14) in particular configured according to the Ethernet, STM-n and/or Fiberchannel standard.
